(19) Europäisches Patentamt
European Patent Office
Office européen des brevets

(11) EP 4 575 516 A1

(12) DEMANDE DE BREVET EUROPEEN

(43) Date de publication:
25.06.2025 Bulletin 2025/26

(51) Classification Internationale des Brevets (IPC):
G01P 11/02 (2006.01)    G08G 1/052 (2006.01)

(21) Numéro de dépôt: 24204413.9

(22) Date de dépôt: 03.10.2024

(52) Classification Coopérative des Brevets (CPC):
G01P 11/02; G08G 1/052

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR
Etats d'extension désignés:
BA
Etats de validation désignés:
GE KH MA MD TN

(30) Priorité: 21.12.2023 FR 2314933

(71) Demandeur: IDEMIA Road Safety France
92400 Courbevoie (FR)

(72) Inventeurs:
• MORICEAU, Damien
  92400 Courbevoie (FR)
• FERRERI, Jean-Thomas
  92400 Courbevoie (FR)
• DERGANE, Pascal
  92400 Courbevoie (FR)

(74) Mandataire: IPS
2, place Samuel de Champlain
92400 Courbevoie (FR)

(54) **PROCÉDÉ DE VÉRIFICATION D'HORODATAGES FOURNIS PAR UN RADAR DE CONTRÔLE ROUTIER**

(57) Procédé mis en oeuvre par ordinateur comprenant les étapes suivantes : obtention (600) d'un horodatage d'image indiquant un instant d'acquisition, par une unité de contrôle routier, d'une image montrant une plaque d'immatriculation d'un véhicule, l'horodatage d'image ayant été indiqué par une horloge de l'unité de contrôle routier ; obtention (602) de données de synchronisation temporelle, lesdites données de synchronisation temporelle ayant été reçues par l'unité de contrôle routier au cours d'un intervalle de temps prédéfini incluant l'horodatage d'image pour synchroniser temporellement l'horloge de l'unité de contrôle routier avec un serveur de temps ; et test de cohérence (604) de l'horodatage d'image avec les données de synchronisation temporelle, le test de cohérence produisant un résultat de test indiquant que l'horodatage d'image est valide ou invalide.

[Fig. 4]

**Description**

**DOMAINE DE L'INVENTION**

La présente divulgation concerne un procédé de vérification d'horodatages fournis par une unité de contrôle routier.

**ETAT DE LA TECHNIQUE**

Pour contrôler que la vitesse de véhicules circulant sur une route ne dépasse pas une vitesse maximale autorisée, il est connu d'utiliser un système de contrôle routier comprenant une paire d'unités de contrôle routier, disposés à distance l'un de l'autre le long de la route.

Chacun des deux unités de contrôle routier acquiert une image montrant la plaque d'immatriculation d'un véhicule circulant sur la route. Deux images sont ainsi successivement acquises.

Une façon d'estimer la vitesse du véhicule représenté dans les deux images consiste à diviser la distance entre les deux unités de contrôle routier, qui est connue à l'avance, par la durée qui sépare les instants où les deux images ont été acquises.

Pour identifier ces deux instants, les unités de contrôle routier se fondent sur leurs horloges internes respectives, qui mesurent le temps qui s'écoule.

Toutefois, de telles horloges interne ne sont pas toujours fiables. En conséquence, les instants d'acquisition des deux images peuvent être mal évalués par les unités de contrôle routier, et ceci peut conduire à une estimation imprécise de la vitesse du véhicule représenté dans les images.

Pour compenser le manque de fiabilité des horloges internes, une solution pourrait consister à synchroniser ces horloges internes avec un serveur de temps distant, fournissant une référence de temps réputée fiable. Une unité de contrôle routier pourrait ainsi régulièrement émettre des requêtes de synchronisation au serveur de temps, et le serveur de temps retournerait à l'unité de contrôle routier des données de synchronisation, pour permettre à l'unité de se synchroniser avec le serveur de temps.

Toutefois, cette solution reste imparfaite. Lorsqu'une image est acquise par l'unité de contrôle routier relativement longtemps après la dernière synchronisation effectuée (par exemple très peu de temps avant la synchronisation suivante), il est possible que l'horloge interne de l'unité ait dérivé de manière suffisamment conséquente pour affecter négativement la précision d'une vitesse à estimer ultérieurement.

**EXPOSE DE L'INVENTION**

Un but de la présente divulgation est de détecter une situation susceptible de conduire à une mauvaise estimation d'une vitesse à l'aide d'une unité de contrôle routier.

Ce but est atteint par un procédé mis en oeuvre par ordinateur comprenant les étapes suivantes : obtention d'un horodatage d'image indiquant un instant d'acquisition, par une unité de contrôle routier, d'une image montrant une plaque d'immatriculation d'un véhicule, l'horodatage d'image ayant été indiqué par une horloge de l'unité de contrôle routier ; obtention de données de synchronisation temporelle, lesdites données de synchronisation temporelle ayant été reçues par l'unité de contrôle routier au cours d'un intervalle de temps prédéfini incluant l'horodatage d'image pour synchroniser temporellement l'horloge de l'unité de contrôle routier avec un serveur de temps ; et test de cohérence de l'horodatage d'image avec les données de synchronisation temporelle, le test de cohérence produisant un résultat de test indiquant que l'horodatage d'image est valide ou invalide.

Ce procédé constitue un premier objet de la présente divulgation et peut également comprendre les caractéristiques optionnelles suivantes, prises seules ou en combinaison à chaque fois que cela fait sens techniquement.

Optionnellement, les données de synchronisation temporelle comprennent une première valeur se rapportant à un premier paramètre de synchronisation, et le test de cohérence comprend une comparaison entre une valeur à tester et un premier seuil prédéfini, et le résultat de test indique que l'horodatage est invalide lorsque la valeur à tester est supérieure au premier seuil prédéfini, la valeur à tester étant la première valeur ou une valeur corrigée résultant d'une correction de la première valeur mise en oeuvre à l'aide des données de synchronisation temporelle.

Optionnellement, les données de synchronisation temporelle comprennent une séquence de premières valeurs se rapportant au premier paramètre de synchronisation, les premières valeurs ayant été séquentiellement reçues par l'unité de contrôle routier au cours de l'intervalle de temps prédéfini, et le procédé comprend une sélection d'une valeur extrémale dans la séquence de premières valeurs, et dans lequel le premier seuil prédéfini est comparé sélectivement avec la valeur extrémale ou avec une valeur extrémale corrigée résultant d'une correction de la valeur extrémale mise en oeuvre à l'aide des données de synchronisation temporelle.

Optionnellement, les premières valeurs comprennent au moins une valeur reçue par l'unité de contrôle routier avant l'acquisition de l'image, et au moins une autre valeur reçue par l'unité de contrôle routier après l'acquisition de l'image.

Optionnellement, les données de synchronisation temporelle comprennent une séquence de jeux de données, les jeux de données ayant été séquentiellement reçus par l'unité de contrôle routier au cours de l'intervalle de temps prédéfini, dans lequel les jeux de données comprennent des premières valeurs respectives se rapportant au premier paramètre de synchronisation et des deuxièmes valeurs respectives se rapportant à un deuxième paramètre de synchronisation différent du premier paramètre de synchronisation, et le procédé comprend des étapes de : présélection, dans la séquence de jeux de données, des jeux de données dont les deuxièmes valeurs respectives ne sont pas supérieures en valeur absolue à un deuxième seuil prédéfini ; sélection d'une valeur extrémale parmi les premières valeurs respectives des jeux de données présélectionnés, dans lequel le premier seuil prédéfini est comparé sélectivement avec la valeur extrémale ou avec une valeur extrémale corrigée résultant d'une correction de la valeur extrémale mise en oeuvre à l'aide des données de synchronisation temporelle.

Optionnellement, les données de synchronisation temporelle comprennent une deuxième valeur se rapportant à un deuxième paramètre de synchronisation différent du premier paramètre de synchronisation, le test de cohérence comprend une comparaison entre une autre valeur à tester et un deuxième seuil prédéfini, l'autre valeur à tester étant la deuxième valeur ou une autre valeur corrigée résultant d'une correction de la deuxième valeur à l'aide des données de synchronisation temporelle. Le résultat de test indique que l'horodatage est invalide lorsqu'au moins une des deux conditions suivantes est remplie : la valeur à tester est supérieure au premier seuil prédéfini, et l'autre valeur à tester est supérieure au deuxième seuil prédéfini.

Optionnellement, le deuxième paramètre de synchronisation est une gigue temporelle représentative d'une variation de latence réseau entre l'horloge de l'unité de contrôle routier et le serveur de temps.

Optionnellement, le premier paramètre de synchronisation est un décalage temporel entre l'horloge de l'unité de contrôle routier et le serveur de temps.

Optionnellement, la correction d'une valeur se rapportant à un paramètre de synchronisation à l'aide des données de synchronisation temporelle comprend soustraire à ladite valeur une moyenne de décalages temporels entre l'horloge de l'unité de contrôle routier et le serveur de temps, voire soustraire à ladite valeur une gigue minimale au cours de l'intervalle de temps.

Optionnellement, l'intervalle de temps prédéfini a une durée supérieure à une période de temps utilisée par l'unité de contrôle routier pour requérir périodiquement des données de synchronisation temporelle auprès du serveur de temps.

Optionnellement, le procédé comprend une estimation d'une vitesse du véhicule à partir d'une distance prédéfinie entre l'unité de contrôle routier et une autre unité de contrôle routier, et d'une durée entre l'horodatage d'image et un autre horodatage d'image, l'autre horodatage d'image indiquant un instant d'acquisition, par l'autre unité de contrôle routier, d'une autre image montrant la plaque d'immatriculation du véhicule.

Un deuxième objet de la présente divulgation est un produit programme d'ordinateur comprenant des instructions de code de programme pour l'exécution des étapes du procédé constituant le premier objet de la divulgation, lorsque ce programme est exécuté par un ordinateur.

Ce programme peut utiliser n'importe quel langage de programmation (par exemple, un langage objet ou autre), et être sous la forme d'un code source interprétable, d'un code partiellement compilé ou d'un code totalement compilé.

Un troisième objet de la présente divulgation vise également un support d'enregistrement non transitoire, lisible par un ordinateur, sur lequel est enregistré un produit programme d'ordinateur comprenant des instructions de code pour la mise en oeuvre des étapes du procédé constituant le premier objet de la divulgation lorsque ce programme est exécuté par un ordinateur.

Un quatrième objet de la présente divulgation est un système comprenant : une unité de contrôle routier et un processeur. L'unité de contrôle routier comprend : un radar, une caméra configurée pour acquérir une image montrant une plaque d'immatriculation d'un véhicule, une horloge configurée pour produire un horodatage d'image indiquant un instant d'acquisition, par l'unité de contrôle routier, de l'image, et une interface de communication pour recevoir des données de synchronisation temporelle au cours d'un intervalle de temps prédéfini incluant l'horodatage d'image, les données de synchronisation temporelle étant fournies par un serveur de temps, et adaptées pour synchroniser temporellement l'horloge de l'unité de contrôle routier avec le serveur de temps. Le processeur est configuré pour mettre en oeuvre un test de cohérence de l'horodatage d'image avec les données de synchronisation temporelle, le test de cohérence produisant un résultat de test indiquant si l'horodatage d'image est valide ou invalide.

## DESCRIPTION DES FIGURES

Fig. 1 illustre de façon schématique un système selon un mode de réalisation.

Fig. 2 représente les composants interne d'une unité de contrôle routier et d'un serveur de contrôle, selon un mode de réalisation.

Fig. 3 est un organigramme d'étapes d'un procédé mis en oeuvre par une unité de contrôle routier, selon un mode de réalisation.

Fig. 4 est un organigramme d'étapes d'un procédé mis en oeuvre par un serveur de contrôle, selon un mode de réalisation.

Fig. 5a, Fig. 5b et Fig. 5c sont des organigramme constituant trois modes de réalisation différents d'une étape de test de cohérence mise en oeuvre par un serveur de contrôle.

Sur l'ensemble des figures, les éléments similaires portent des références identiques.

## DESCRIPTION DETAILLEE DE L'INVENTION

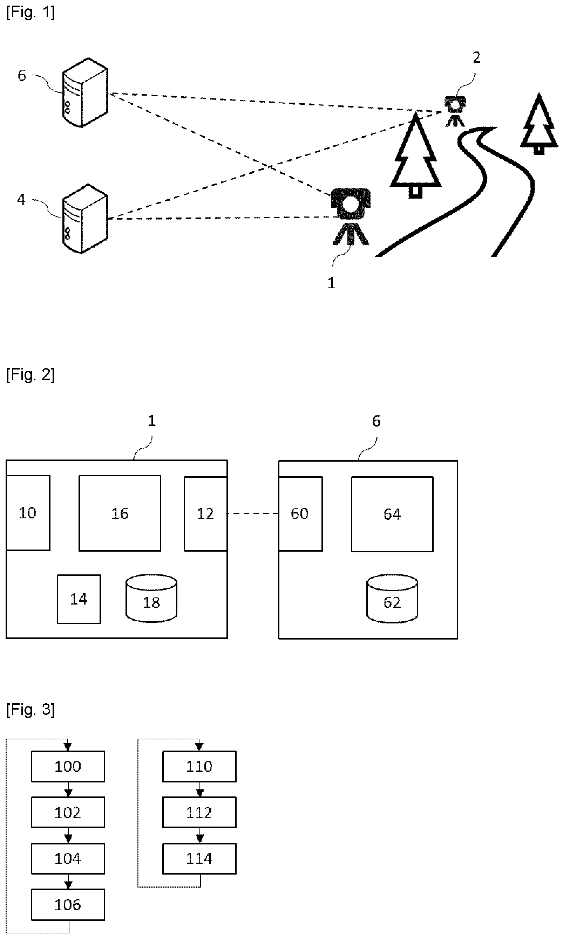

Sur la Fig. 1 est représenté un système comprenant une première unité de contrôle routier 1, une deuxième unité de contrôle routier 2, un serveur de temps 4 et un serveur de contrôle 6.

La première unité de contrôle routier 1 et la deuxième unité de contrôle routier 2 sont positionnés le long d'une route, de sorte qu'un véhicule roulant sur la route passe à proximité de la première unité de contrôle routier 1, puis à proximité de la deuxième unité de contrôle routier 2. La distance qui sépare les deux unités de contrôle routier est connue.

En référence à la figure 2, la première unité de contrôle routier 1 comprend un radar (non représenté), par exemple de type radar Doppler, une caméra 10, une interface de communication réseau 12, une horloge 14, un processeur 16 et une mémoire 18.

La caméra 10 est configurée pour acquérir des images montrant la plaque d'immatriculation de véhicules circulant sur la route.

L'interface de communication réseau 12 est configurée pour communiquer avec le serveur de temps 4 (non représentée sur la figure 2) et le serveur de contrôle 6. L'interface de communication réseau 12 est de type quelconque, soit filaire (par exemple Ethernet) soit radio sans fil (cellulaire, Wi-Fi, etc.).

L'horloge 14 est adaptée pour fournir des horodatages (« timestamp » en anglais) indiquant les instants auxquels sont survenus certains évènements détectés par l'unité de contrôle routier 1. Ces événements seront décrits plus loin.

Le processeur 16 est configuré pour commander l'émission, par l'interface de communication réseau 12, de requêtes de synchronisation auprès du serveur de temps 4, et ce de manière périodique.

Le processeur 16 est également configuré pour synchroniser l'horloge 14 à l'aide d'un jeu de données de synchronisation émis par le serveur de temps 4 puis reçu par l'interface de communication réseau 12, en réponse à une requête de synchronisation. La synchronisation, connue de l'état de la technique, a pour objectif de recaler l'horloge 14 de sorte que le temps mesuré par l'horloge correspond à un temps mesuré par le serveur de temps. Ainsi, une synchronisation peut faire avancer ou reculer le temps mesuré par l'horloge 14, si d'aventure l'horloge 14 avait dérivé par rapport au serveur de temps depuis une synchronisation précédente.

Un jeu de données de synchronisation conventionnel comprend les paramètres listés dans le tableau ci-dessous.

[Table 1]

| Paramètre | Définition |
|---|---|
| Délai (« delay ») | Durée moyenne entre l'émission d'une requête de synchronisation et la réception d'un jeu de données de synchronisation faisant réponse à la requête de synchronisation. |
| Décalage temporel (« offset ») | Ecart temporel moyen entre l'horloge et le serveur de temps. |
| Gigue (« jitter ») | Représente une variation de latence réseau entre l'horloge et le serveur de temps. |

La mémoire 18 est configurée pour mémoriser des données de synchronisation reçues et des images acquises par la caméra 10. La mémoire 18 est en particulier configurée pour mémorisée ces données et images en les classant de manière temporelle, en leur attribuant des horodatages fournis par l'horloge 14. La mémoire 18 est de type quelconque, par exemple Flash, EEPROM (pour « Electrically-erasable programmable read-only memory » en anglais), HDD (pour « Hard Disk Drive » en anglais), SSD (pour « Solid-State Drive » en anglais), etc. La mémoire constitue ou comprend un support d'enregistrement non transitoire lisible par ordinateur.

Lae deuxième unité de contrôle routier 2 comprend les mêmes composants que ceux décrits plus haut pour la première unité de contrôle routier 1.

Le serveur de temps 4 constitue une référence temporelle. Son fonctionnement est connu de l'état de la technique. Par exemple, le serveur de temps 4 est un serveur NTP, ce qui signifie que les communications entre chaque unité de contrôle routier 1, 2 et le serveur de temps 4, de même que les calculs de synchronisation mis en oeuvre par les radars de contrôle routier 1, 2, sont conformes au protocole NTP (Network Time Protocol).

Toujours en référence à la Fig. 2, le serveur de contrôle 6 comprend une interface de communication réseau 60, une mémoire 62 et un processeur 64.

L'interface de communication réseau 60 est configuré pour communiquer avec chaque unité de contrôle routier 1, 2. Elle est de n'importe quel type, par exemple l'un quelconque des types précités pour l'interface de communication réseau 12.

La mémoire 62 est configurée pour mémoriser des données reçues via l'interface de communication réseau 60 ou produites par le processeur 64.

Le processeur 64 est configuré pour traiter des données reçues via l'interface de communication réseau 60 ou mémorisés par la mémoire 62. Ces traitements seront décrits plus loin.

En référence à la Fig. 3, un procédé mis en oeuvre par l'unité de contrôle routier 1 comprend les étapes suivantes.

Dans une étape 100, le processeur 16 commande l'émission, via l'interface de communication réseau 12, d'une requête de synchronisation à destinateur du serveur de temps 4.

Dans une étape 102, le processeur 16 détecte la réception, par l'interface de communication réseau 12, d'un jeu de données de synchronisation émanant du serveur de temps 4, et faisant réponse à la requête de synchronisation.

Dans une étape 104, le processeur 16 synchronise l'horloge 14 de l'unité de contrôle routier 1 à l'aide du jeu de données de synchronisation reçu.

Dans une étape 106, le processeur 16 commande la transmission au serveur de contrôle 6, via l'interface de communication réseau 12, du jeu de données de synchronisation, en association avec un horodatage fourni par l'horloge 14, l'horodatage indiquant l'instant de réception du jeu de données de synchronisation (donc quand l'étape 102 est survenue) ou l'instant de synchronisation de l'horloge 14 à l'aide des données de synchronisation. Par convention, un tel horodatage est appelé dans la suite « horodatage de synchronisation ».

Les étapes qui précèdent sont répétées dans le temps. En particulier, l'étape 100 d'envoi est déclenchée périodiquement.

Le procédé mis en oeuvre par l'unité de contrôle routier 1 comprend par ailleurs les étapes suivantes.

Dans une étape 110, l'unité de contrôle routier 1 détecte le passage d'un véhicule dans le champ de vision de sa caméra 10, à l'aide de moyens de détection appropriés (connus de l'homme du métier).

Dans une étape 112, la caméra 10 acquiert une image montrant une plaque d'immatriculation du véhicule détecté.

Dans une étape 114, le processeur 16 commande la transmission au serveur de contrôle 6, via l'interface de communication réseau 12, d'un horodatage indiquant l'instant d'acquisition de l'image par la caméra 10, cet horodatage ayant été indiqué par l'horloge 14. Par convention, un tel horodatage est appelé dans la suite « horodatage d'image », pour différencier cet horodatage des horodatages de synchronisation. Le processeur 16 peut également envoyer l'image acquise au serveur de contrôle 6 en association avec l'horodatage d'image qui s'y rapporte.

Les étapes qui précèdent sont également répétées dans le temps, pour plusieurs véhicules circulant sur la route.

Une mise en oeuvre répétée des étapes de transmission 106 et 114 conduisent l'unité de contrôle routier 1 à transmettre au serveur de contrôle 6 des horodatages T1... TN. Les N horodatages forment une séquence ordonnée. Par convention, T1 est l'horodatage le plus ancien, et TN l'horodatage le plus récent. Comme indiqué plus haut, chaque horodatage Ti est soit un horodatage d'image, ce qui veut dire que cet horodatage indique l'instant d'acquisition d'une image par la caméra 10 de l'unité de contrôle routier 1, soit un horodatage de synchronisation, ce qui veut dire que cet horodatage est associé à un jeu de données de synchronisation Si, également fourni au serveur de contrôle 6.

Le tableau ci-dessous contient un exemple de 7 horodatages successifs T1 à T7, formant une séquence. T1 et T4 sont dans cet exemple des horodatages d'image. Les autres Ti sont des horodatages de synchronisation, ils sont donc associés à des jeux de données de synchronisation respectifs Si.

[Table 2]

| T1 | (horodatage d'image) |
|----|----------------------|
| T2 | S2                   |
| T3 | S3                   |
| T4 | (horodatage d'image) |

(suite)

| T5 | S4 |
|----|----|
| T6 | S5 |
| T7 | S6 |

Bien entendu, les transmissions de ces données au serveur de contrôle 6 peuvent être réalisées de manière synchrone, ou bien de manière différée, de sorte à grouper les transmissions. Dans ce deuxième cas, les données transmises au serveur de contrôle 6 peuvent être mémorisées temporairement dans la mémoire 18 de l'unité de contrôle routier 1.

Le procédé qui précède est également mis en oeuvre par la deuxième unité de contrôle routier 2.

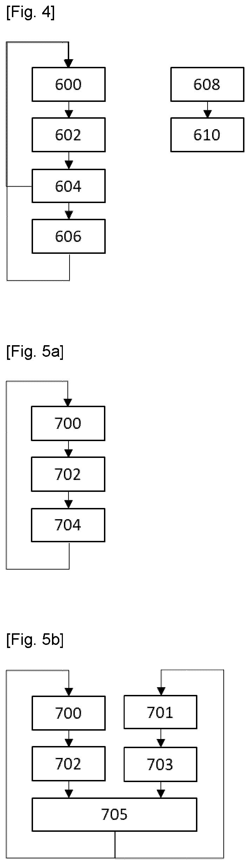

En référence à la Fig. 4, il est maintenant décrit un procédé mis en oeuvre par le serveur de contrôle 6 pour vérifier les données fournies par la première unité de contrôle routier 1.

Il est supposé à ce stade que les horodatages T1 à TN fournis par la première unité de contrôle routier 1 ont été reçus par l'interface de communication réseau 60 du serveur de contrôle 6, de même que chaque jeu de données de synchronisation Si associé à un horodatage de synchronisation.

Dans une étape 600, le processeur 64 obtient un horodatage d'image $Ti$ indiquant l'instant d'acquisition, par l'unité de contrôle routier 1, de l'image. Cette obtention se fait typiquement par lecture dans sa mémoire 62.

Dans une étape 602, le processeur 64 obtient des données de synchronisation temporelle ayant été reçues par l'unité de contrôle routier 1 au cours d'un intervalle de temps prédéfini [Ta, Tb] incluant l'horodatage d'image $Ti$. On a donc $Ta < Ti \leq Tb$.

Dans un mode de réalisation, l'intervalle de temps prédéfini a une durée prédéfinie $\Delta T$, si bien que $\Delta T = Tb - Ta$. Par ailleurs, la position temporelle des bornes Ta, Tb de l'intervalle par rapport à l'horodatage d'image $Ti$ est également prédéfinie. Par exemple, l'intervalle de temps est centré sur l'horodatage d'image. Dans ce cas, l'intervalle de temps prédéfinie est de la forme $[Ta, Tb] = [Ti - \Delta T/2, Ti + \Delta T/2]$.

Pour obtenir les données de synchronisation temporelle ayant été reçues par l'unité de contrôle routier 1 au cours de l'intervalle de temps prédéfini [Ta, Tb], le processeur 64 compare chaque horodatage de synchronisation présent dans la mémoire 62 et émanant de l'unité de contrôle routier 1, avec l'intervalle de temps prédéfini. Si un horodatage de synchronisation a une valeur comprise dans [Ta, Tb], alors cet horodatage est retenu.

Dans une étape 604, le processeur 64 applique un test de cohérence de l'horodatage d'image avec les données de synchronisation reçues par l'unité de contrôle routier 1 au cours de l'intervalle de temps prédéfini. Le test de cohérence produit un résultat qui indique soit que l'horodatage d'image est valide (dans le cas où il est considéré au cours du test comme cohérent avec les données de synchronisation obtenues), soit que l'horodatage d'image est invalide (dans le cas contraire où il est considéré au cours du test comme incohérent avec les données de synchronisation obtenues).

Lorsque le résultat indique que l'horodatage d'image est valide, le processeur 64 peut mettre en oeuvre une étape 606 de correction de cet horodatage d'image sur la base des données de synchronisation. Cette étape n'est pas mise en oeuvre lorsque le résultat indique que l'horodatage d'image est invalide.

La correction réalisée à l'étape 606 peut utiliser seulement une moyenne des décalages temporels constatés dans la plage [Ta, Tb], comme suit :

$$\text{Timestamp\_corrected} = \text{timestamp} + \text{moyenne(offsets)}$$

En variante, on peut appliquer un raisonnement similaire pour le la gigue temporelle. Une correction éventuelle consisterait alors à rechercher la valeur minimale observée (MIN(abs(JITTER))) dans la plage, puis à l'ajouter à l'horodatage d'image considéré. En effet, si dans la plage on observe une « latence réseau » de x microsecondes, on peut alors estimer que l'horodate d'image est en retard de cette latence. On a ainsi :

$$\text{Timestamp\_corrected} = \text{timestamp} + \text{Moyenne(offset)} + \text{MIN(abs(jitter))}$$

Les étapes qui précèdent sont répétées par le serveur de contrôle 6 pour différents horodatages d'image, voire tous les horodatages d'image que le serveur de contrôle 6 reçoit de l'unité de contrôle routier 1.

Le serveur de contrôle 6 répète les mêmes étapes sur les données fournies par la deuxième unité de contrôle routier 2. Autrement dit, le serveur de contrôle 6 teste la cohérence d'horodatage d'image fournie par la deuxième unité de contrôle routier 2.

Différents modes de réalisation du test de cohérence appliqué par le processeur 64 sont maintenant détaillés.

Dans un premier mode de réalisation, en référence à la Fig. 5a, le test de cohérence utilise uniquement un premier paramètre de synchronisation.

Chaque jeu de données de synchronisation Si, associé à un horodatage de synchronisation Ti, comprend (voire est constitué de) une valeur se rapportant à ce premier paramètre de synchronisation.

Ainsi, les données de synchronisation que le serveur de contrôle 6 a obtenu à l'étape 602 (qui ont en amont été reçues par l'unité de contrôle routier 1 au cours de l'intervalle de temps prédéfini [Ta, Tb] incluant l'horodatage d'image faisant l'objet du test de cohérence) comprennent une séquence de premières valeurs se rapportant au premier paramètre de synchronisation (offset), les premières valeurs temporelles ayant été séquentiellement reçues par l'unité de contrôle routier 1 au cours cet intervalle de temps.

De préférence, les premières valeurs comprennent au moins une valeur reçue par l'unité de contrôle routier 1 avant l'acquisition de l'image, et au moins une autre valeur reçue par l'unité de contrôle routier 1 après l'acquisition de l'image.

Dans une étape 700, le processeur 64 sélectionne une valeur extrémale dans la séquence de premières valeurs. La valeur extrémale est une valeur maximale en valeur absolue. Ceci veut dire que lorsque les premières valeurs sont signées, alors la valeur extrémale est le maximum des valeurs absolues respectives des premières valeurs.

Dans une étape 702, le processeur 64 compare la valeur extrémale avec un premier seuil prédéfini.

De préférence, le premier seuil prédéfini est comparé sélectivement avec la valeur extrémale. Ceci signifie que toutes les autres premières valeurs de la séquence ne sont pas comparées avec le premier seuil. Une seule comparaison est effectuée à l'étape 702. Ceci permet d'économiser des ressources de calcul.

Dans une étape 704, le processeur 64 génère le résultat de test sur la base de la comparaison 702, en observant la logique suivante :

Le résultat de test indique que l'horodatage d'image est invalide lorsque la valeur extrémale est supérieure au premier seuil prédéfini.

Le résultat de test indique que l'horodatage d'image est valide lorsque la valeur extrémale n'est pas supérieure au premier seuil prédéfini.

Par exemple, le premier paramètre de synchronisation est le décalage temporel (« offset ») décrit plus haut. Dans ce cas, la séquence de premières valeurs est une séquence de décalages temporels, et le premier seuil prédéfini est un seuil de décalage temporel sélectivement comparé à un décalage temporel maximal dans l'intervalle de temps [Ta, Tb].

La logique utilisée par le processeur 64 pour invalider un horodatage d'image dans ce premier mode de réalisation peut se résumer par la formule suivante :

$$\text{max(abs(OFFSET))} > \text{seuil offset}$$

A titre d'illustration de ce premier mode de réalisation, il est supposé que :

- Le seuil de décalage temporel soit fixé à 500 millisecondes (on ne veut pas que l'horloge de l'unité de contrôle routier 1 soit en avance ou en retard de plus de 500 ms par rapport à l'horloge du serveur de temps 4) ;
- La durée de l'intervalle de temps [Ta, Tb] est égale à 10 mn, et l'horodatage d'image Ti à tester est centré sur cet intervalle. L'intervalle est alors [Ti - 5 mn, Ti + 5 mn] ;

Il est déterminé la valeur minimale MIN et la valeur maximale MAX des décalages temporels dont les horodatages d'image tombent dans cet intervalle. Le processeur vérifie que abs(MAX) < 500 ms et que abs(MIN) < 500 ms. Si abs(MAX) > 500 ms ou abs(MIN) > 500 ms, alors le résultat de test est négatif (incohérence de l'horodatage d'image). En effet, cette situation signifie qu'il y a une probabilité que l'horodatage d'image présente un décalage de plus de 500 ms par rapport à l'instant auquel l'image a réellement été acquise par la caméra 10.

En effet, on peut approximer la probabilité que l'offset X à l'instant T (timestamp du de l'unité) soit supérieur à notre seuil 500 ms est selon une distribution gaussienne :

$$P(X > 500ms) = 1 - F((500 - u) / s)$$

Où :

- u = moyenne des offsets mesurés dans la plage ;
- s = écart-type des offsets mesurés dans la plage ;
- F = fonction de répartition de la distribution normale standard.

Dans le cas où au moins une première valeur (décalage temporel) est supérieure au seuil de 500 ms, il est considéré que la moyenne est inférieure ou égale à ce max, et donc dans un scénario du pire, la moyenne est supérieure à 500, l'écart type tend vers zéro, et donc la probabilité tend vers 1. Il peut être donc légitiment considérer que l'utilisation de la valeur extrémale permet bien d'identifier le cas où il y a une probabilité non nulle que l'offset du timestamp T dépasse le premier seuil prédéfini.

Si aucune des premières valeurs n'est supérieure à 500 ms, alors le MAX est inférieur à 500 ms, et la probabilité que l'acquisition de l'image soit survenue à un instant décalé de plus de 500 ms par rapport à l'horodatage d'image remonté devient négligeable.

Dans un deuxième mode de réalisation, en référence à la Fig. 5b, le test de cohérence utilise non seulement le premier paramètre de synchronisation discuté précédemment, mais également un deuxième paramètre de synchronisation différent du premier paramètre de synchronisation.

Chaque jeu de données de synchronisation Si, associé à l'horodatage de synchronisation Ti, comprend ainsi :

- Une valeur se rapportant au premier paramètre de synchronisation, et
- Une valeur se rapportant au deuxième paramètre de synchronisation.

Ainsi, les données de synchronisation que le serveur de contrôle 6 a obtenu à l'étape 602 (qui ont en amont été reçues par l'unité de contrôle routier 1 au cours de l'intervalle de temps prédéfini [Ta, Tb] incluant l'horodatage d'image faisant l'objet du test de cohérence) comprennent une séquence de jeux de données Si, dans lequel les jeux de données comprennent :

- Des premières valeurs respectives se rapportant au premier paramètre de synchronisation ;
- Des deuxièmes valeurs respectives se rapportant au deuxième paramètre de synchronisation.

De préférence, les jeux de données Si comprennent au moins un jeu reçu par l'unité de contrôle routier 1 avant l'acquisition de l'image, et au moins un autre jeu reçu par l'unité de contrôle routier 1 après l'acquisition de l'image.

Les étapes 700 et 702 du premier mode de réalisation sont également mises en oeuvre dans le deuxième mode de réalisation, en lien avec le premier paramètre de synchronisation.

Par ailleurs, dans une étape 701, le processeur sélectionne une deuxième valeur extrémale dans la séquence de deuxièmes valeurs. La valeur extrémale est une valeur maximale en valeur absolue. Ceci veut dire que lorsque les deuxièmes valeurs sont signées, alors la valeur extrémale est le maximum des valeurs absolues respectives des deuxièmes valeurs.

Dans une étape 703, le processeur compare la deuxième valeur extrémale avec un deuxième seuil prédéfini.

De préférence, le deuxième seuil prédéfini est comparé sélectivement avec la deuxième valeur extrémale. Ceci signifie que toutes les autres deuxièmes valeurs de la séquence ne sont pas comparées avec le deuxième seuil. Ceci permet d'économiser des ressources de calcul.

En définitive, les étapes 701 et 703 sont des étapes similaires aux étapes 700 et 702, à ceci près qu'elles concernent le deuxième paramètre de synchronisation.

Dans une étape 705, le processeur génère le résultat de test sur la base des comparaisons effectuées lors des étapes 702 et 703, comme suit :

Le résultat de test indique que l'horodatage d'image est invalide lorsqu'au moins une des deux conditions suivantes est remplie :

- La première valeur est supérieure au premier seuil prédéfini, ou
- La deuxième valeur est supérieure au deuxième seuil prédéfini.

Le résultat de test indique que l'horodatage d'image est valide lorsque les deux conditions suivantes sont remplies :

- La première valeur n'est pas supérieure au premier seuil prédéfini, et
- La deuxième valeur n'est pas supérieure au deuxième seuil prédéfini.

Par exemple, le premier paramètre de synchronisation est le décalage temporel (offset en anglais) décrit plus haut, et le deuxième paramètre de synchronisation est la gigue (jitter en anglais) décrite également plus haut. Dans ce cas :

- La séquence de premières valeurs est une séquence de décalages temporels, et le premier seuil prédéfini est un seuil de décalage temporel sélectivement comparé à un décalage temporel maximal dans l'intervalle de temps [Ta, Tb], et
- La séquence de deuxièmes valeurs est une séquence de gigues, et le deuxième seuil prédéfini est un seuil de gigue sélectivement comparé à une gigue maximal dans l'intervalle de temps [Ta, Tb].

La logique utilisée pour conclure à l'invalidité de l'horodatage d'image dans ce deuxième mode de réalisation peut être exprimée comme suit :

$$\max(\mathrm{abs}(OFFSET)) > \text{seuil offset} \quad \text{ou} \quad \max(\mathrm{abs}(JITTER)) > \text{seuil jitter}$$

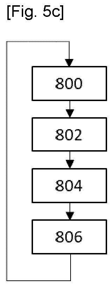

Dans un troisième mode de réalisation illustré, en référence à la Fig. 5c, le test de cohérence utilise un premier paramètre de synchronisation et un deuxième paramètre de synchronisation différent.

Comme dans le deuxième mode de réalisation, les données de synchronisation que le serveur de contrôle 6 a obtenu à l'étape 602 (qui ont en amont été reçues par l'unité de contrôle routier 1 au cours de l'intervalle de temps prédéfini [Ta, Tb] incluant l'horodatage d'image faisant l'objet du test de cohérence) comprennent une séquence de jeux de données Si, dans lequel les jeux de données comprennent :

- Des premières valeurs respectives se rapportant au premier paramètre de synchronisation,
- Des deuxièmes valeurs respectives se rapportant au deuxième paramètre de synchronisation.

Toutefois, on va voir que le deuxième paramètre de synchronisation joue un rôle qui n'est pas symétrique à celui du premier paramètre de synchronisation, comme c'était le cas dans le deuxième mode de réalisation.

Dans une étape 800, le processeur 64 présélectionne, dans la séquence de jeux de données, des jeux de données dont les deuxièmes valeurs respectives ne sont pas supérieures en valeur absolue à un deuxième seuil prédéfini. Le résultat de cette présélection est donc un sous-ensemble de la séquence d'entrée (certains jeux de données ont été éliminés).

Dans une étape 802, le processeur 64 sélectionne une valeur extrémale parmi les premières valeurs respectives des jeux de données présélectionnés. Cette étape de sélection 802 est similaire à l'étape 700, à la différence près que cette sélection 802 prend en entrée le résultat de la présélection 800.

Dans une étape 804, le processeur 64 compare la valeur extrémale avec un premier seuil prédéfini.

Dans une étape 806, le processeur génère le résultat de test sur la base de cette comparaison :

- Le résultat de test indique que l'horodatage d'image est invalide lorsque la valeur extrémale est supérieure au premier seuil prédéfini ;
- Le résultat de test indique que l'horodatage est valide lorsque la valeur extrémale n'est pas supérieure au premier seuil prédéfini.

De préférence, le premier seuil prédéfini est comparé sélectivement avec la valeur extrémale. Ceci signifie que toutes les autres premières valeurs de la séquence ne sont pas comparées avec le premier seuil. Ceci permet d'économiser des ressources de calcul.

Par exemple, le premier paramètre de synchronisation est le décalage temporel (« offset ») décrit plus haut, et le deuxième paramètre de synchronisation est la gigue (« jitter ») décrite également plus haut. Dans ce cas :

La séquence de premières valeurs est une séquence de décalages temporels, et le premier seuil prédéfini est un seuil de décalage temporel sélectivement comparé à un décalage temporel maximal dans l'intervalle de temps [Ta, Tb], et

La séquence de deuxièmes valeurs est une séquence de gigues, et le deuxième seuil prédéfini est un seuil de gigue sélectivement comparé à une gigue maximale dans l'intervalle de temps [Ta, Tb].

Pour illustrer ce troisième mode de réalisation, prenons un exemple dans lequel :

- Le seuil de décalage temporel est fixé à 500 millisecondes (on ne veut pas que l'horloge de l'unité soit en avance ou en retard de plus de 500 ms par rapport à l'horloge du serveur de temps) ;
- La durée de l'intervalle de temps [Ta, Tb] est égale à 10 mn, et l'horodatage d'image Ti à tester est centré sur cet intervalle. L'intervalle est alors [Ti - 5 mn, Ti + 5 mn] ;
- Le seuil de gigue est de 1 milliseconde.

L'algorithme mis en oeuvre consiste alors à filtrer dans cet intervalle les mesures avec un « jitter » en valeur absolue supérieur à 1 milliseconde. Pour les valeurs restantes, c'est-à-dire celles ayant été présélectionnées, le processeur regarde si la condition suivante est respectée :

$$\text{max(abs(OFFSET))} > \text{seuil offset}$$

En définitive, le troisième mode de réalisation peut être vu comme une extension du premier mode de réalisation, incorporant une étape supplémentaire de présélection permettant de filtrer des premières valeurs (de décalage temporel) associées à des deuxièmes valeurs (de gigue) aberrantes.

En référence à la Fig. 4, le serveur de contrôle 6 peut également mettre en oeuvre les étapes suivantes, après avoir obtenues des données de synchronisation émanant du la première unité de contrôle routier 1 et de la deuxième unité de contrôle routier 2.

Dans une étape 608, le processeur 64 détecte que les conditions suivantes sont réunies :

- Un horodatage d'image fourni par la première unité de contrôle routier 1 montre une plaque d'immatriculation d'un véhicule ;
- Un autre horodatage d'image, fourni par la deuxième unité de contrôle routier 2 montre la plaque d'immatriculation du même véhicule.

Dans une étape 610, le processeur 64 estime une vitesse du véhicule à partir des données suivantes :

- La distance entre la première unité de contrôle routier 1 et la deuxième unité de contrôle routier 2, qui est connue à l'avance ;
- La durée entre l'horodatage d'image (fourni par la première unité de contrôle routier 1) et l'autre horodatage d'image (fourni par la deuxième unité de contrôle routier 2).

L'étape 610 peut être mise en oeuvre à chaque fois que les conditions de l'étape 608 sont réunies. En variante, l'étape 610 peut être mise en oeuvre uniquement si l'horodatage d'image et l'autre horodatage d'image ont été déclarés valides lors de mises en oeuvre respectives du test de cohérence 604, ou si ces horodatages ont été corrigés lors de l'étape 606 (si celle-ci est implémentée par le serveur de contrôle 6). Autrement dit, le processeur 64 n'estime aucune vitesse à partir d'un horodatage d'image déclaré comme invalide lors du test de cohérence 604.

Dans les modes de réalisation discutés précédemment, le test de cohérence appliqué à des horodatages d'image émanant de l'unité de contrôle routier 1 est réalisé par un serveur de contrôle 6 constituant une entité distante de la première unité de contrôle routier 1. **En** variante, ce test de cohérence est mis en oeuvre par le processeur 16 de la première unité de contrôle routier 1.

Dans les modes de réalisation discutés précédemment, le serveur de contrôle 6 peut avoir pour fonction d'estimer des vitesses de véhicule. Ceci n'est pas obligatoire. Le test de cohérence des horodatages et les étapes ultérieures d'estimation de vitesses de véhicules peuvent être mise en oeuvre par des entités différentes, par exemple deux serveurs distincts.

Dans les modes de réalisation discutés précédemment, il a été supposé que l'intervalle de temps prédéfini est défini par sa durée. Ce n'est pas obligatoire. En variante, l'intervalle de temps prédéfini pourrait être défini par sa taille, exprimée en nombre d'horodatages. Par exemple, il peut être choisi comme intervalle de temps un intervalle qui permet d'aller chercher K horodatages de synchronisation antérieures à l'horodatage d'image à tester, et K horodatages de synchronisation ultérieurs à l'horodatage d'image à tester. Ainsi, le nombre total d'horodatages de synchronisation pris en compte est égal à 2K. Quand un extrémum est sélectionné, cet extrémum est ainsi sélectionné dans un ensemble de 2K valeurs (éventuellement un sous ensemble dans le troisième mode de réalisation incorporant une présélection).

Dans les modes de réalisation discutés précédemment, il a été supposé les horodatages d'image émanant des deux unités de contrôle routier 1, 2 sont testés, voire corrigés. Il suffit toutefois de réaliser ces étapes sur une des deux unités de contrôle routier pour améliorer la situation décrite dans la partie introductive.

Dans les modes de réalisation discutés précédemment, les seuils utilisés (premier seuil ou deuxième seuil) sont comparés avec des valeurs qui font partie des données de synchronisation temporelle fournies par l'une des deux unités de contrôle routier. Il a par ailleurs été envisagé de corriger les horodatages d'images qui passent avec succès le test de cohérence, donc postérieurement à ce test de cohérence, en leur ajoutant un terme correctif. Toutefois, une autre stratégie peut consister à corriger les valeurs destinées à être comparées avec l'un ou l'autre des seuils à l'aide des données de synchronisation temporelle, en leur retranchant ce terme correctif.

Par exemple, dans une variante du test de cohérence selon le premier mode de réalisation, la valeur extrémale dans la séquence de premières valeurs est remplacée par une version corrigée de cette valeur extrémale. Cette correction peut consister à soustraire à la valeur extrémale la moyenne des décalages temporels entre l'horloge de l'unité de contrôle routier et le serveur de temps dans l'intervalle de temps considéré. Ainsi, la valeur à comparer au seuil passe de la forme « MAX (abs(OFFSET)) » à la forme « MAX(abs(OFFSET - moyenne(offsets))) ». Une autre correction plus évoluée peut également soustraire la gigue minimale au cours de l'intervalle de temps. La valeur comparée est alors de la forme « MAX (abs(OFFSET - moyenne(offset) - MIN(abs(JITTER))).

Bien entendu, le test de cohérence selon le deuxième mode de réalisation et le test de cohérence selon le troisième mode de réalisation peuvent faire l'objet de variantes similaires avec correction avant comparaison avec un seuil.

**Revendications**

1. Procédé mis en oeuvre par ordinateur comprenant des étapes de :

   • Obtention (600) d'un horodatage d'image indiquant un instant d'acquisition, par une unité de contrôle routier, d'une image montrant une plaque d'immatriculation d'un véhicule, l'horodatage d'image ayant été indiqué par une horloge de l'unité de contrôle routier,
   • Obtention (602) de données de synchronisation temporelle, lesdites données de synchronisation temporelle ayant été reçues par l'unité de contrôle routier au cours d'un intervalle de temps prédéfini incluant l'horodatage d'image pour synchroniser temporellement l'horloge de l'unité de contrôle routier avec un serveur de temps,
   • Test de cohérence (604) de l'horodatage d'image avec les données de synchronisation temporelle, le test de cohérence produisant un résultat de test indiquant que l'horodatage d'image est valide ou invalide.

2. Procédé selon la revendication précédente, dans lequel :

   • Les données de synchronisation temporelle comprennent une première valeur se rapportant à un premier paramètre de synchronisation,
   • Le test de cohérence comprend une comparaison entre une valeur à tester et un premier seuil prédéfini, et le résultat de test indique que l'horodatage est invalide lorsque la valeur à tester est supérieure au premier seuil prédéfini, la valeur à tester étant la première valeur ou une valeur corrigée résultant d'une correction de la première valeur mise en oeuvre à l'aide des données de synchronisation temporelle.

3. Procédé selon la revendication précédente, dans lequel :

   • Les données de synchronisation temporelle comprennent une séquence de premières valeurs se rapportant au premier paramètre de synchronisation, les premières valeurs ayant été séquentiellement reçues par l'unité de contrôle routier au cours de l'intervalle de temps prédéfini,
   • Le procédé comprend une sélection d'une valeur extrémale dans la séquence de premières valeurs, et dans lequel le premier seuil prédéfini est comparé sélectivement avec la valeur extrémale ou avec une valeur extrémale corrigée résultant d'une correction de la valeur extrémale mise en oeuvre à l'aide des données de synchronisation temporelle.

4. Procédé selon la revendication précédente, dans lequel les premières valeurs comprennent au moins une valeur reçue par l'unité de contrôle routier avant l'acquisition de l'image, et au moins une autre valeur reçue par l'unité de contrôle routier après l'acquisition de l'image.

5. Procédé selon l'une quelconque des revendications 2 à 4, dans lequel :

   • Les données de synchronisation temporelle comprennent une séquence de jeux de données, les jeux de données ayant été séquentiellement reçus par l'unité de contrôle routier au cours de l'intervalle de temps prédéfini, dans lequel les jeux de données comprennent :

      • Des premières valeurs respectives se rapportant au premier paramètre de synchronisation,
      • Des deuxièmes valeurs respectives se rapportant à un deuxième paramètre de synchronisation différent du premier paramètre de synchronisation,

   • Le procédé comprend des étapes de :

      • Présélection, dans la séquence de jeux de données, des jeux de données dont les deuxièmes valeurs respectives ne sont pas supérieures en valeur absolue à un deuxième seuil prédéfini,
      • Sélection d'une valeur extrémale parmi les premières valeurs respectives des jeux de données présélectionnés, dans lequel le premier seuil prédéfini est comparé sélectivement avec la valeur extrémale ou avec une valeur extrémale corrigée résultant d'une correction de la valeur extrémale mise en oeuvre à l'aide des données de synchronisation temporelle.

6. Procédé selon l'une quelconque des revendications 2 à 4, dans lequel :

• Les données de synchronisation temporelle comprennent une deuxième valeur se rapportant à un deuxième paramètre de synchronisation différent du premier paramètre de synchronisation,
• Le test de cohérence comprend une comparaison entre une autre valeur à tester et un deuxième seuil prédéfini, l'autre valeur à tester étant la deuxième valeur ou une autre valeur corrigée résultant d'une correction de la deuxième valeur à l'aide des données de synchronisation temporelle,
• Le résultat de test indique que l'horodatage est invalide lorsqu'au moins une des deux conditions suivantes est remplie :

• La valeur à tester est supérieure au premier seuil prédéfini, et
• L'autre valeur à tester est supérieure au deuxième seuil prédéfini.

7. Procédé selon l'une quelconque des revendications 5 et 6, dans lequel le deuxième paramètre de synchronisation est une gigue temporelle représentative d'une variation de latence réseau entre l'horloge de l'unité de contrôle routier et le serveur de temps.

8. Procédé selon l'une quelconque des revendications 2 à 7, dans lequel le premier paramètre de synchronisation est un décalage temporel entre l'horloge de l'unité de contrôle routier et le serveur de temps.

9. Procédé selon l'une quelconque des revendications 2 à 8, dans lequel la correction d'une valeur se rapportant à un paramètre de synchronisation à l'aide des données de synchronisation temporelle comprend soustraire à ladite valeur une moyenne de décalages temporels entre l'horloge de l'unité de contrôle routier et le serveur de temps.

10. Procédé selon la revendication précédente, dans lequel la correction de la valeur se rapportant à un paramètre de synchronisation à l'aide des données de synchronisation temporelle comprend soustraire à ladite valeur une gigue minimale au cours de l'intervalle de temps.

11. Procédé selon l'une quelconque des revendications précédentes, dans lequel l'intervalle de temps prédéfini a une durée supérieure à une période de temps utilisée par l'unité de contrôle routier pour requérir périodiquement des données de synchronisation temporelle auprès du serveur de temps.

12. Procédé selon l'une quelconque des revendications précédentes, comprenant une étape de :

• Estimation (610) d'une vitesse du véhicule à partir d'une distance prédéfinie entre l'unité de contrôle routier et une autre unité de contrôle routier, et d'une durée entre l'horodatage d'image et un autre horodatage d'image, l'autre horodatage d'image indiquant un instant d'acquisition, par l'autre unité de contrôle routier, d'une autre image montrant la plaque d'immatriculation du véhicule.

13. Produit programme d'ordinateur comprenant des instructions de code de programme pour l'exécution des étapes du procédé selon l'une des revendications précédentes, lorsque ce programme est exécuté par un ordinateur.

14. Support d'enregistrement non transitoire, lisible par un ordinateur, sur lequel est enregistré un produit programme d'ordinateur comprenant des instructions de code pour la mise en oeuvre du procédé selon l'une des revendications 1 à 12 lorsque ce programme est exécuté par un ordinateur.

15. Système comprenant :

• Une unité de contrôle routier (1) comprenant :

• Un radar, de préférence un radar Doppler ;
• Une caméra (10) configurée pour acquérir une image montrant une plaque d'immatriculation d'un véhicule,
• Une horloge (14) configurée pour produire un horodatage d'image indiquant un instant d'acquisition, par l'unité de contrôle routier, de l'image,

• Une interface de communication (12) pour recevoir des données de synchronisation temporelle au cours d'un intervalle de temps prédéfini incluant l'horodatage d'image, les données de synchronisation temporelle étant fournies par un serveur de temps, et adaptées pour synchroniser temporellement l'horloge de l'unité de contrôle routier avec le serveur de temps,

• Un processeur (64) configuré pour mettre en oeuvre un test de cohérence de l'horodatage d'image avec les données de synchronisation temporelle, le test de cohérence produisant un résultat de test indiquant si l'horodatage d'image est valide ou invalide.

EP 4 575 516 A1

[Fig. 1]

[Fig. 2]

[Fig. 3]

[Fig. 4]

```
        ┌──────────────┐
        │     600      │
        └──────────────┘
               │
               ▼
        ┌──────────────┐          ┌──────────────┐
        │     602      │          │     608      │
        └──────────────┘          └──────────────┘
               │                         │
               ▼                         ▼
        ┌──────────────┐          ┌──────────────┐
        │     604      │          │     610      │
        └──────────────┘          └──────────────┘
               │
               ▼
        ┌──────────────┐
        │     606      │
        └──────────────┘
```

[Fig. 5a]

```
        ┌──────────────┐
        │     700      │
        └──────────────┘
               │
               ▼
        ┌──────────────┐
        │     702      │
        └──────────────┘
               │
               ▼
        ┌──────────────┐
        │     704      │
        └──────────────┘
```

[Fig. 5b]

```
   ┌──────────┐      ┌──────────┐
   │   700    │      │   701    │
   └──────────┘      └──────────┘
        │                 │
        ▼                 ▼
   ┌──────────┐      ┌──────────┐
   │   702    │      │   703    │
   └──────────┘      └──────────┘
        │                 │
        ▼                 ▼
   ┌──────────────────────────┐
   │           705            │
   └──────────────────────────┘
```

[Fig. 5c]

Europäisches
Patentamt

European
Patent Office

Office européen
des brevets

**RAPPORT DE RECHERCHE EUROPEENNE**

Numéro de la demande

EP 24 20 4413

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GB 2 442 503 A (PIPS TECHNOLOGY LTD [GB]) 9 avril 2008 (2008-04-09) * le document en entier * ----- | 1-15 | INV. G01P11/02 G08G1/052 |
| A | WO 2014/163892 A1 (3M INNOVATIVE PROPERTIES CO [US]) 9 octobre 2014 (2014-10-09) * le document en entier * ----- | 1-15 | |
| A | RU 2 733 638 C1 (AKTSIONERNOE OBSHCHESTVO ELVIS NEOTEK [RU]) 5 octobre 2020 (2020-10-05) * le document en entier * ----- | 1-15 | |
| A | US 2014/267725 A1 (SMITH BRIAN [GB]) 18 septembre 2014 (2014-09-18) * le document en entier * ----- | 1-15 | |

DOMAINES TECHNIQUES
RECHERCHES (IPC)

G01P
G08G

Le présent rapport a été établi pour toutes les revendications

| Lieu de la recherche | Date d'achèvement de la recherche | Examinateur |
|---|---|---|
| Munich | 20 février 2025 | Kern, Olivier |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 4413

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2025

| Document brevet cité au rapport de recherche | | Date de publication | Membre(s) de la famille de brevet(s) | | Date de publication |
|---|---|---|---|---|---|
| GB 2442503 | A | 09-04-2008 | AUCUN | | |
| WO 2014163892 | A1 | 09-10-2014 | US | 2014267725 A1 | 18-09-2014 |
| | | | WO | 2014163892 A1 | 09-10-2014 |
| RU 2733638 | C1 | 05-10-2020 | AUCUN | | |
| US 2014267725 | A1 | 18-09-2014 | US | 2014267725 A1 | 18-09-2014 |
| | | | WO | 2014163892 A1 | 09-10-2014 |

EPO FORM P0460

Pour tout renseignement concernant cette annexe : voir Journal Officiel de l'Office européen des brevets, No.12/82